# EUROPEAN PATENT APPLICATION

(11) **EP 3 549 492 A1**
(43) Date of publication of application: **09.10.2019**
(21) Application number: 18173256.1
(22) Date of filing: 18.05.2018
(51) Int. Cl.: A47J 31/00, A47J 31/54

(54) **VEHICLE-MOUNTED COFFEE MAKER WITH HEATING FUNCTION**

(30) Priority: 04.04.2018 CN 201810300769
(71) Applicant: Ningbo Jinyu Electric Appliance Co., Ltd., Yuyao City, Zhejiang (CN)
(72) Inventor: SHI, Junda, Yuyao City, Zhejiang Province (CN); SHI, Zhongyu, Yuyao City, Zhejiang Province (CN); LIU, Shukuo, Yuyao City, Zhejiang Province (CN); DAI, Huijin, Yuyao City, Zhejiang Province (CN)
(74) Representative: Schmid, Nils T.F.

(57) **Abstract**

The present invention discloses a vehicle-mounted coffee maker with a heating function. The coffee maker comprises: a water tank having an opening on its bottom, a heat transfer member, a coffee capsule and a coffee cup, wherein the heat transfer member is arranged below the water tank, embedded into the opening on the bottom of the water tank and hermetically connected to the water tank; the coffee capsule is arranged below the water tank and in communicative connection to the water tank; the coffee cup is arranged below the coffee capsule, and the heat transfer member comes into contact with a field effect transistor; a drain of the field effect transistor is connected to an anode of a power supply, a source thereof is connected to a cathode of the power supply, and a gate thereof is connected to a driving circuit; and, the driving circuit is arranged on a circuit board. By the coffee maker of the present invention, the stability of the heating current can be improved.

## Description

This application claims priority to Chinese application number 201810300769.3, filed 4 April 2018, with a title of VEHICLE-MOUNTED COFFEE MAKER WITH HEATING FUNCTION. The above-mentioned patent application is incorporated herein by reference in its entirety.

### TECHNICAL FIELD

The present invention relates to the technical field of coffee makers, and in particular to a vehicle-mounted coffee maker with a heating function.

### BACKGROUND

The heating function of a conventional coffee maker is mainly realized by heating by using a resistive heating wire. However, during the heating by the resistive heating wire, the heating current will increase with the rise of the input voltage, so that the working current is unstable.

### SUMMARY

In view of this problem, it is necessary to provide a vehicle-mounted coffee maker with a heating function in order to improve the stability of the heating current.

For this purpose, the present invention provides the following solutions.

A vehicle-mounted coffee maker with a heating function is provided, including: a water tank having an opening on its bottom, a heat transfer member, a coffee capsule and a coffee cup, wherein:
the heat transfer member is arranged below the water tank, embedded into the opening on the bottom of the water tank and hermetically connected to the water tank; the coffee capsule is arranged below the water tank and in communicative connection to the water tank; the coffee cup is arranged below the coffee capsule, and the heat transfer member comes into contact with a field effect transistor; a drain of the field effect transistor is connected to an anode of a power supply, a source thereof is connected to a cathode of the power supply, and a gate thereof is connected to a driving circuit; and, the driving circuit is arranged on a circuit board.

Optionally, the heat transfer member is funnel-shaped; an upper portion of the heat transfer member is embedded into the opening on the bottom of the water tank, while a lower portion thereof extends into the coffee capsule; and, a central through hole of the heat transfer member realizes the communicative connection of the coffee capsule to the water tank.

Optionally, a cylinder sleeve is penetrated through the center of the water tank in an axial direction, and the bottom of the cylinder sleeve is communicated with the central through hole of the heat transfer member; a piston is sheathed within the cylinder sleeve; a compression bar is connected to an upper portion of the piston, and the compression bar is extended upward to the outside of the cylinder sleeve and connected to a handle; and, when in use, the handle is pressed down to move the piston so as to force water in the water tank into the coffee capsule.

Optionally, a front component to be pierced is provided at a junction of the heat transfer member with the coffee capsule.

Optionally, a rear component to be pierced is provided on the bottom of the coffee capsule, and the rear component to be pierced is pierced due to water pressure.

Optionally, a shell is provided between the water tank and the coffee cup, and all the heat transfer member, the field effect transistor and the circuit board are encapsulated within the shell.

Optionally, the water tank and the heat transfer member are connected hermetically via a water tank sealing ring, and the water tank and the shell are also connected hermetically via a water tank sealing ring.

Optionally, a water inlet hole is further formed on a side wall of the cylinder sleeve; the water inlet hole is located below the piston; a sealing ball is provided on the side wall of the cylinder sleeve corresponding to the water inlet hole; a one-way valve is provided on the bottom of the cylinder sleeve so that water flows from the cylinder sleeve into the coffee capsule in a single direction; when the piston moves up, the sealing ball is moved away, and the one-way valve is closed, so that water flows from the water tank into the cylinder sleeve; and, when piston moves down, the sealing ball occludes the water inlet hole, and the one-way valve is opened, so that water flows from the cylinder sleeve into the coffee capsule.

Optionally, an input terminal of the driving circuit is connected to an output terminal of a microprocessor, and the microprocessor controls the driving voltage of the driving circuit via a PWM.

Optionally, a first temperature sensor is provided on the field effect transistor, and a second temperature sensor is provided in contact with water in the water tank; and, both an output terminal of the first temperature sensor and an output terminal of the second temperature sensor are connected to the microprocessor.

Compared with the prior art, the present invention has the following beneficial effects: in the vehicle-mounted coffee maker with a heating function disclosed by the present invention, a heat transfer member comes into contact with a field effect transistor; and, a drain of the field effect transistor is connected to an anode of a power supply, a source thereof is connected to a cathode of the power supply, and a gate thereof is connected to a driving circuit. Accordingly, when a certain driving voltage is applied to the gate, the current flowing between the drain and the source is ensured to be constant, and the stability of the heating current is thus ensured.

### BRIEF DESCRIPTION OF THE DRAWINGS

To describe the technical solutions in the embodiments of the present invention or in the prior art more clearly, the drawings to be used in the description of the embodiments will be briefly described below. Apparently, the drawings described hereinafter are some of the embodiments of the present invention, and a person of ordinary skill in the art can obtain other drawings according to these drawings without paying any creative effort.
- Fig. 1: is an overall structure diagram of an embodiment of a vehicle-mounted coffee maker with a heating function according to the present invention;
- Fig. 2: is an exploded structure diagram of an embodiment of the vehicle-mounted coffee maker with a heating function according to the present invention; and
- Fig. 3: is an internal structure diagram of an embodiment of the vehicle-mounted coffee maker with a heating function according to the present invention.

### DETAILED DESCRIPTION

The technical solutions in the embodiments of the present invention will be clearly and completely described below with reference to the accompanying drawings in the embodiments of the present invention. Apparently, the embodiments described herein are merely a part but not all of the embodiments of the present invention. All other embodiments obtained by a person of ordinary skill in the art without paying any creative effort on the basis of the embodiments in the present invention shall fall into the protection scope of the present invention.

An objective of the present invention is to provide a vehicle-mounted coffee maker with a heating function in order to improve the stability of the heating current.

To make the objectives, features and advantages of the present invention more obvious and comprehensible, the present invention will be further described below in detail by specific implementations with reference to the accompanying drawings.

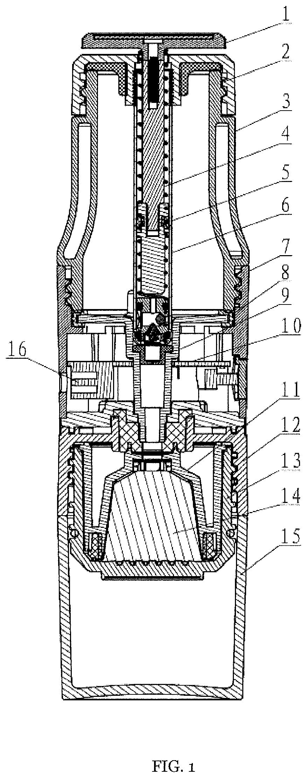

Fig. 1 is an overall structure diagram of an embodiment of the vehicle-mounted coffee maker with a heating function according to the present invention.

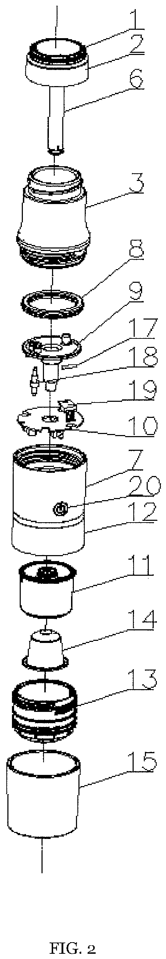

Fig. 2 is an exploded structure diagram of an embodiment of the vehicle-mounted coffee maker with a heating function according to the present invention.

Referring to Figs. 1 and 2, the vehicle-mounted coffee maker with a heating function includes: a water tank 3 having an opening on its bottom, a heat transfer member 9, a coffee capsule 14 and a coffee cup 15.

The heat transfer member 9 is arranged below the water tank 3, embedded into the opening on the bottom of the water tank 3 and hermetically connected to the water tank 3. The coffee capsule 14 is arranged below the water tank 3 and in communicative connection to the water tank 3. The coffee cup 15 is arranged below the coffee capsule 14, and the heat transfer member 9 comes into contact with a field effect transistor 19. A drain of the field effect transistor 19 is connected to an anode of a power supply, a source thereof is connected to a cathode of the power supply, and a gate thereof is connected to a driving circuit. The driving circuit is arranged on a circuit board 10.

The tank body of the water tank 3 is made of double glazing glass, and there is a vacuum structure inside the double glazing glass, so that thermal insulation can be realized effectively, and a user can be prevented from scalding while the loss of heat is avoided.

The heat transfer member 9 is funnel-shaped. An upper portion of the heat transfer member 9 is embedded into the opening on the bottom of the water tank 3, while a lower portion thereof extends into the coffee capsule 14. A central through hole of the heat transfer member 9 realizes the communicative connection of the coffee capsule 14 to the water tank 3.

A front component to be pierced 11 is provided at a junction of the heat transfer member 9 with the coffee capsule 14.

A rear component to be pierced 13 is provided on the bottom of the coffee capsule 14, and the rear component to be pierced 13 is pierced due to water pressure.

A shell is provided between the water tank 3 and the coffee cup 15, and all the heat transfer member 9, the field effect transistor 19, the circuit board 10 and the coffee capsule 14 are encapsulated within the shell.

The water tank 3 and the heat transfer member 9 are connected hermetically via a water tank sealing ring 8, and the water tank 3 and the shell are also connected hermetically via a water tank sealing ring 8.

The shell includes an upper body 7 and a lower body 12. The upper body 7 is located above the lower body 12. The upper body 7 is hermetically connected to the water tank 3. The heat transfer member 9, the field effect transistor 19 and the circuit board 10 are encapsulated within the upper body 7. The lower body 12 is hermetically connected to the coffee capsule 14, and the coffee capsule 14 is encapsulated within the lower body 12.

An input port 16 of a 12V-24V power supply is provided on the upper body 7, and a power button 20 is provided correspondingly.

An input terminal of the driving circuit is connected to an output terminal of a microprocessor, and the microprocessor controls the driving voltage of the driving circuit via a PWM.

A first temperature sensor 17 is provided on the field effect transistor 19, and a second temperature sensor 18 is provided in contact with water in the water tank 3. Both an output terminal of the first temperature sensor 17 and an output terminal of the second temperature sensor 18 are connected to the microprocessor.

A water tank cover 2 is provided above the water tank 3.

A cylinder sleeve 6 is penetrated through the center of the water tank 3 in an axial direction, and the bottom of the cylinder sleeve 6 is communicated with the central through hole of the heat transfer member 9. A piston 5 is sheathed within the cylinder sleeve 6. A compression bar 4 is connected to an upper portion of the piston 5, and the compression bar 4 is extended upward to the outside of the cylinder sleeve 6 and connected to a handle 1. The handle 1 is provided above the water tank cover 2. When in use, the handle 1 is pressed down to move the piston 5 so as to force water in the water tank 3 into the coffee capsule 14.

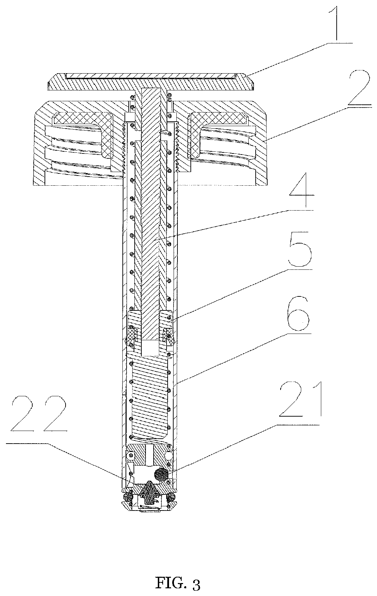

Fig. 3 is an internal structure diagram of an embodiment of the vehicle-mounted coffee maker with a heating function according to the present invention.

A water inlet hole is further formed on a side wall of the cylinder sleeve 6. The water inlet hole is located below the piston 5. A sealing ball 21 is provided on the side wall of the cylinder sleeve 6 corresponding to the water inlet hole. A one-way valve 22 is provided on the bottom of the cylinder sleeve 6, and a water inlet port of the one-way valve 22 is located above an water outlet port, so that water flows from the cylinder sleeve 6 into the coffee capsule 14 in a single direction. When the piston 5 moves up, the sealing ball 21 is moved away, and the one-way valve 22 is closed, so that water flows from the water tank 3 into the cylinder sleeve 6; and, when piston 5 moves down, the sealing ball 21 occludes the water inlet hole, and the one-way valve 22 is opened, so that water flows from the cylinder sleeve 6 into the coffee capsule 14.

The operating flow of the coffee maker of the present invention will be described below.

Loading the coffee capsule: the coffee cup 15 is moved away, the rear component to be pierced 13 is then unscrewed, the coffee capsule 14 is placed, the rear component to be pierced 13 is screwed, and the coffee cup 15 is put in place.

Feeding water: the water tank cover 2 is opened, cold water is fed, and the water tank cover 2 is closed again.

Heating: the 12V-24V power supply is inserted into the input port 16, and the power button 20 is pressed down to start to heat by the field effect transistor 19. The anode of the power supply voltage is connected to the drain D of the field effect transistor, while the cathode thereof is connected to the source S of the field effect transistor. The driving circuit portion of the controller is connected to the gate G of the field effect transistor, and a small driving voltage is applied to the gate G, so that the N-channel resistance is reduced, and a certain current flows through the D and S of the field effect fields. As a result, the field effect transistor generates heat, and the heating purpose is thus achieved. The controller is controlled by a microcomputer chip MCU, and the power can be kept constant by a PWM modulation method. During the operation, the MCU samples the current working voltage and current, then performs accurate circulation by internal programs of the MCU, adjusts the output pulse width of the PWM, and changes the voltage applied to the gate of the field effect transistor by an integrating circuit, so that the N-channel resistance is changed, the current flowing through the source and the drain is changed, and the power is kept constant. Since there are two kinds of vehicle batteries, i.e., 12V and 24V, under the control of the internal programs of the MCU, the controller can be universal in the 12V/24V DC voltage, without requiring any change in accessories.

Temperature detection is realized by temperature sensors. The microprocessor (MCU) takes samples, then performs internal calculation, and displays the current water temperature by a digital screen or a liquid crystal display screen, so that the user can immediately know the current water temperature. During the operation, when the MCU detects that water is boiling at 100°C, the output of the PWM is stopped, and the field effect transistor stops heating. If the temperature needs to be maintained, the heat preservation function can be selected, and the heat preservation process is accurately controlled by the internal programs of the MCU, so that the water temperature is maintained at the set temperature. The current temperature of the field effect transistor is detected by a temperature sensor, and the temperature is sampled by the MCU and then subjected to internal calculation and comparison. In a case of water shortage, since the heat of the field effect transistor cannot be dissipated, the temperature on the surface of the field effect transistor will be higher than the temperature when there is enough water. After the temperature is detected and when the temperature exceeds the temperature during the normal heating, the MCU stops the output of the PWM, turns off the field effect transistor and sends an alarm.

Making coffee: at the end of heating, the handle can be bounced by rotating it by 190°. By pressing the handle up and down, the compression bar 4 pushes the piston 5 to move up and down within the cylinder sleeve 6 so as to generate pressure. Accordingly, hot water in the water tank is forced into the coffee capsule 14 and pierces the coffee capsule 14. The hot water flows through the coffee capsule to generate coffee, and the coffee flows into the coffee cup 15.

Compared with the prior art, the present invention has the following beneficial effects: in the vehicle-mounted coffee maker with a heating function disclosed by the present invention, a heat transfer member comes into contact with a field effect transistor; and, a drain of the field effect transistor is connected to an anode of a power source, a source thereof is connected to a cathode of the power source, and a gate thereof is connected to a driving circuit. Accordingly, when a certain driving voltage is applied to the gate, the current flowing between the drain and the source is ensured to be constant, and the stability of the heating current is thus ensured. Meanwhile, by controlling the voltage at the gate of the field effect transistor by the PWM, the magnitude of the heating current is controlled, it is ensured that water can be boiled fully, and the waste of electric energy is reduced. By the temperature control method and the heating method in the present invention, the energy can be saved by above 20% in comparison to the conventional heating method, and it is free of radiation and pollution. Meanwhile, by detecting the temperature of the field effect transistor by the temperature sensor, dry burning in the case of water shortage is avoided. Therefore, the field effect transistor can be protected effectively, and the service life can be prolonged.

Although the principle and implementations of the present invention have been described above by specific instances in the present invention, the foregoing description of the embodiments is merely for helping in understanding the method and core idea of the present invention. Meanwhile, various alterations to the specific implementations and applications may come to a person of ordinary skill in the art according to the concept of the present invention. In conclusion, the contents of the description shall not be regarded as limitations to the present invention.

### Reference sign list

- 1: Handle
- 2: Water tank cover
- 3: Water tank
- 4: Compression bar
- 5: Piston
- 6: Cylinder sleeve
- 7: Upper body
- 8: Water tank sealing ring
- 9: Heat transfer member
- 10: Circuit board
- 11: Front component
- 12: Lower body
- 13: Rear component
- 14: Coffee capsule
- 15: Coffee cup
- 16: Input port
- 17, 18: Temperature sensor
- 19: Field effect transistor
- 20: Power button
- 21: Sealing ball
- 22: Valve

## Claims

1. A vehicle-mounted coffee maker with a heating function, comprising: a water tank (3) having an opening on its bottom, a heat transfer member, a coffee capsule (14) and a coffee cup (15), wherein: the heat transfer member is arranged below the water tank (3), embedded into the opening on the bottom of the water tank (3) and hermetically connected to the water tank (3); the coffee capsule (14) is arranged below the water tank (3) and in communicative connection to the water tank (3); the coffee cup (15) is arranged below the coffee capsule (14), and the heat transfer member comes into contact with a field effect transistor (19); a drain of the field effect transistor (19) is connected to an anode of a power supply, a source thereof is connected to a cathode of the power supply, and a gate thereof is connected to a driving circuit; and, the driving circuit is arranged on a circuit board (7).

2. The vehicle-mounted coffee maker with a heating function according to claim 1, wherein the heat transfer member is funnel-shaped; an upper portion of the heat transfer member is embedded into the opening on the bottom of the water tank (3), while a lower portion thereof extends into the coffee capsule (14); and, a central through hole of the heat transfer member realizes the communicative connection of the coffee capsule (14) to the water tank (3).

3. The vehicle-mounted coffee maker with a heating function according to claim 1 or 2, wherein a cylinder sleeve (6) is penetrated through the center of the water tank (3) in an axial direction, and the bottom of the cylinder sleeve (6) is communicated with the central through hole of the heat transfer member; a piston (5) is sheathed within the cylinder sleeve (6); a compression bar (4) is connected to an upper portion of the piston (5), and the compression bar (4) is extended upward to the outside of the cylinder sleeve (6) and connected to a handle (1); and, when in use, the handle (1) is pressed down to move the piston (5) so as to force water in the water tank (3) into the coffee capsule (14).

4. The vehicle-mounted coffee maker with a heating function according to any of claims 1 to 3, wherein a front component to be pierced is provided at a junction of the heat transfer member with the coffee capsule (14).

5. The vehicle-mounted coffee maker with a heating function according to any of claims 1 to 4, wherein a rear component to be pierced is provided on the bottom of the coffee capsule (14), and the rear component to be pierced is pierced due to water pressure.

6. The vehicle-mounted coffee maker with a heating function according to any of claims 1 to 5, wherein a shell is provided between the water tank (3) and the coffee cup (15), and all the heat transfer member, the field effect transistor (19) and the circuit board (7) are encapsulated within the shell.

7. The vehicle-mounted coffee maker with a heating function according to any of claims 1 to 6, wherein the water tank (3) and the heat transfer member are connected hermetically via a water tank sealing ring (8), and the water tank (3) and the shell are also connected hermetically via a water tank sealing ring (8).

8. The vehicle-mounted coffee maker with a heating function according to any of claims 1 to 7, wherein a water inlet hole is further formed on a side wall of the cylinder sleeve (6); the water inlet hole is located below the piston (5); a sealing ball (21) is provided on the side wall of the cylinder sleeve (6) corresponding to the water inlet hole; a one-way valve is provided on the bottom of the cylinder sleeve (6) so that water flows from the cylinder sleeve (6) into the coffee capsule (14) in a single direction; when the piston (5) moves up, the sealing ball (21) is moved away, and the one-way valve is closed, so that water flows from the water tank (3) into the cylinder sleeve (6); and, when piston (5) moves down, the sealing ball (21) occludes the water inlet hole, and the one-way valve is opened, so that water flows from the cylinder sleeve (6) into the coffee capsule (14).

9. The vehicle-mounted coffee maker with a heating function according to any of claims 1 to 8, wherein an input terminal of the driving circuit is connected to an output terminal of a microprocessor, and the microprocessor controls the driving voltage of the driving circuit via a PWM.

10. The vehicle-mounted coffee maker with a heating function according to any of claims 1 to 9, wherein a first temperature sensor (17,18) is provided on the field effect transistor (19), and a second temperature sensor (18,17) is provided in contact with water in the water tank (3); and, both an output terminal of the first temperature sensor (17, 18) and an output terminal of the second temperature sensor (18,17) are connected to the microprocessor.
